# EUROPÄISCHE PATENTSCHRIFT

(11) **EP 3 695 389 B1**
(45) Veröffentlichungstag und Bekanntmachung des Hinweises auf die Patenterteilung: **01.01.2025**
(21) Anmeldenummer: 18804277.4
(22) Anmeldetag: 15.11.2018
(51) Int. Cl.: G07C 9/00, B60R 25/00

(54) **KOMMUNIKATIONSSYSTEM EINES FAHRZEUGS**
COMMUNICATIONS SYSTEM OF A VEHICLE
SYSTÈME DE COMMUNICATION D'UN VÉHICULE

(30) Priorität: 02.02.2018 DE 102018102405
(43) Veröffentlichungstag der Anmeldung: 19.08.2020
(73) Patentinhaber: HUF Hülsbeck & Fürst GmbH & Co. KG, 42551 Velbert (DE)
(72) Erfinder: ZILLER, Boris, 40885 Ratingen (DE)
(74) Vertreter: Zenz Patentanwälte Partnerschaft mbB
(86) Internationale Anmeldenummer: PCT/EP2018/081339
(87) Internationale Veröffentlichungsnummer: WO 2019/149399

(56) Entgegenhaltungen:
- WO-A1-2017/144345
- WO-A1-2017/144348
- WO-A1-2017/191480
- US-A1- 2014 253 288
- US-A1- 2014 330 449

## Beschreibung

Die Erfindung betrifft ein Kommunikationssystem eines Fahrzeugs. Das Kommunikationssystem dient insbesondere zur Kommunikation des Fahrzeugs mit einem portablen ID-Geber, der insbesondere zur UWB-Kommunikation eingerichtet ist. Die mit dem Kommunikationssystem durchführbare Kommunikation ist geeignet, zu einer Freigabe von Fahrzeugfunktionen für einen Bediener beizutragen, wenn der Bediener den portablen ID-Geber mit sich führt.

Aus dem Stand der Technik sind unterschiedliche auf Funktechnik basierende Zugangssysteme bekannt. Auf diese wird häufig mit dem Begriff des schlüssellosen Zugangssystems Bezug genommen, da sie ohne mechanische Schlüsselbarte funktionsfähig sind. Schlüssellose Zugangssysteme der angesprochenen Art basieren auf einer Funkkommunikation einer fahrzeugseitigen Infrastruktur mit einem portablen ID-Geber. Im Rahmen der durchgeführten Funkkommunikation authentifiziert sich ein zugangsberechtigter ID-Geber an der fahrzeugseitigen Infrastruktur. Die Authentifizierung des ID-Gebers erfolgt typischerweise unter Nutzung kryptographischer Methoden, insbesondere durch Austausch und Prüfung von verschlüsselten Berechtigungsdaten.

Im Bereich der schlüssellosen Zugangssysteme ist die Nutzung niederfrequenter (LF) sowie hochfrequenter (HF) Funkwellen bekannt und üblich. Auch die kombinierte Kommunikation mittels LF/HF-Systemen ist aus der Praxis bekannt. Beispielsweise wird zunächst der ID-Geber mit einem LF-Wecksignal geweckt, woraufhin die eigentliche Authentifizierung im Zuge einer HF-Kommunikation vorgenommen wird.

Bei funkbasierten Berechtigungssystemen ist die Sicherheit, insbesondere mit Hinblick auf eine Kompromittierung der durchgeführten Funkkommunikation, von entscheidender Bedeutung.

Eine Gefahr für die Sicherheit funkbasierter Authentifizierungssysteme beruht auf dem prinzipiellen Nachteil, dass eine LF-Funkkommunikation oder eine HF-Funkkommunikation verlängerbar ist. Eine Art von Konzepten von Angriffsszenarien, die auf Weiterleitung von LF-Funkkommunikation oder HF-Funkkommunikation beruhen, ist beispielsweise unter dem Begriff der Relay-Station-Attacken bekannt.

Ein solcher Stand der Technik ist zum Beispiel in den Dokumenten WO 2017/191480 A1, WO 2017/144345 A1 und US 2014/0330449 A1 offenbart.

Im Zuge der zunehmenden Bedeutung von schlüssellosen Zugangssystemen und vor Hintergrund der obigen Erläuterungen besteht der Wunsch, eine Kommunikation von ID-Gebern mit einem Fahrzeug mit verbesserter Sicherheit vor einer Kompromittierung bereitzustellen.

Aufgabe der Erfindung ist, ein Konzept bereitzustellen, auf dessen Basis eine Authentifizierung eines ID-Gebers an einem Fahrzeug mit verbesserter Sicherheit durchgeführt werden kann.

Die Aufgabe wird mit einem Kommunikationssystem mit den Merkmalen des Patentanspruchs 1 gelöst.

Das Kommunikationssystem weist wenigstens einen ersten UWB-Empfänger und einen zweiten UWB-Empfänger auf.

Das Kommunikationssystem trägt zu einer sicheren Freigabe von Fahrzeugfunktionen bei, indem es ein Authentifizierungssystem des Fahrzeugs mit einer Information darüber versorgt, ob eine UWB-Kommunikation zwischen dem ID-Geber und dem Fahrzeug als authentische Kommunikation betrachtet werden darf.

Das Kommunikationssystem kann dabei je nach Gesamtkonzeption des Fahrzeugs entweder als Teil des Authentifizierungssystems oder als vom Authentifizierungssystem unabhängiges System betrachtet werden.

Der erste UWB-Empfänger umfasst eine erste UWB-Antenne, der zweite UWB-Empfänger umfasst eine zweite UWB-Antenne. Es ist denkbar, dass ein UWB-Empfänger und eine UWB-Antenne Teil eines kompakt bereitgestellten Moduls, beispielsweise eines UWB-Transceivers, sind. Alternativ ist denkbar, dass eine UWB-Antenne mit übrigen Bestandteilen eines UWB-Empfängers gekoppelt, aber von diesen beabstandet ist.

Die erste UWB-Antenne und die zweite UWB-Antenne sind voneinander beabstandet an dem Fahrzeug angeordnet.

Die voneinander beabstandete Anordnung der UWB-Antennen an dem Fahrzeug ist dahingehend zu verstehen, dass der Abstand der UWB-Antennen größer ist als eine unmittelbare benachbarte Anordnung der UWB-Antennen, beispielsweise beträgt der Abstand wenigstens zwei Zentimeter. Wesentlich ist, dass die erste und die zweite UWB-Antenne an unterschiedlichen Positionen des Fahrzeugs angeordnet sind und dass der Abstand der UWB-Antennen voneinander groß genug ist, dass er bei einem Empfang eines selben Signals zu einem für das Kommunikationssystem erfassbaren und/oder auswertbaren Laufzeitunterschied der Laufzeiten des Signals von seiner Sendequelle zu der ersten UWB-Antenne und des Signals von seiner Sendequelle zu der zweiten UWB-Antenne führt.

Alle UWB-Empfänger sind mit einer zentralen UWB-Steuereinheit des Fahrzeugs gekoppelt. Als UWB-Steuereinheit kann eine separate Einheit vorgesehen sein, aber auch die zentrale Steuereinheit des Fahrzeugs oder ein Teil der zentralen Steuereinheit des Fahrzeugs kann als UWB-Steuereinheit eingerichtet sein.

Das Kommunikationssystem ist zur UWB-Kommunikation mit einem vorgegebenen oder einer Anzahl von vorgegebenen ID-Gebern eingerichtet, der ID-Geber selbst ist aber nicht erfindungsgemäßer Bestandteil des Kommunikationssystems.

Die zentrale UWB-Steuereinheit ist eingerichtet, sowohl ein von der ersten UWB-Antenne empfangenes erstes Empfangssignal eines ID-Geber-UWB-Signals als auch ein von der zweiten UWB-Antenne empfangenes zweites Empfangssignal desselben ID-Geber-UWB-Signals in Abhängigkeit voneinander auszuwerten für eine Authentifizierung der Kommunikation des Fahrzeugs mit dem ID-Geber.

Mit anderen Worten: Sowohl die erste UWB-Antenne als auch die zweite UWB-Antenne empfangen dasselbe von dem ID-Geber ausgesendete UWB-Signal (nämlich das ID-Geber-UWB-Signal). Die Authentifizierung der Kommunikation des Fahrzeugs mit dem ID-Geber erfolgt auf Basis sowohl des an der ersten UWB-Antenne empfangenen Empfangssignals als auch des an der zweiten UWB-Antenne empfangenen Empfangssignals. Das bedeutet, dass basierend auf demselben ausgesendeten ID-Geber-UWB-Signal sowohl eine Empfangscharakteristik an der ersten UWB-Antenne als auch eine Empfangscharakteristik an der zweiten UWB-Antenne erfasst werden, wobei beide Empfangscharakteristiken von der zentralen UWB-Steuereinheit gemeinsam ausgewertet werden, um eine Authentifizierung der Kommunikation des Fahrzeugs mit dem ID-Geber herbeizuführen.

Prinzipiell ist die Verwendung von Ultrabreitbandfunksignalen, abgekürzt: UWB-Funksignalen, aus der Praxis bekannt. Sie ist jedoch erst in jüngerer Vergangenheit, nicht zuletzt infolge einer liberaleren Regulierung, für die Benutzung in weiten Anwendungsbereichen zugänglich geworden. Einhergehend damit sind inzwischen universell in Anwendungen implementierbare UWB-Transceiver kommerziell verfügbar.

Bei der Ultrabreitbandtechnologie handelt es sich um eine Art der Funkkommunikation, die auf dem Aussenden kurzer Signalpulse basiert. Die Signalpulse decken eine Vielzahl von Frequenzen innerhalb einer vergleichsweise großen Frequenzbandbreite ab. Die Breite der abdeckten Frequenzbereiche ist nicht zuletzt von regulatorischen Vorgaben des entsprechenden territorialen Gebiets begrenzt oder abhängig. Um die Ultrabreitbandkommunikation ohne Störung der sonstigen Funkkommunikation nutzbar zu machen, sind die verwendeten Sendeleistungen aufgrund regulatorischer Vorgaben in der Regel vergleichsweise gering, weswegen es sich bei der Ultrabreitbandtechnologie im hier genannten Sinne um eine Nahbereichsfunkkommunikation handelt. Eine UWB-Funkkommunikation kann beispielsweise in einem Frequenzbereich erfolgen der innerhalb des Frequenzbereichs zwischen 30 MHz und 30 GHz liegt.

Die Informationsübertragung beruht bei UWB nicht auf Trägerfrequenzmodulation. Stattdessen finden andere Methoden der Modulation Anwendung, wie beispielsweise On/Off-Keying, Pulsamplitudenmodulation oder Pulspositionmodulation.

Die UWB-Kommunikation weist gegenüber anderer Funkkommunikation, beispielsweise gegenüber einer LF-Kommunikation, den prinzipiellen Vorteil auf, dass aufgrund der Aussendung von Pulsen die eine Vielzahl von Frequenzen aufweisen, eine zuverlässige Entfernungsbestimmung mittels eines laufzeitbasierten Ansatzes möglich ist. Darauf wird oft auch mit der Bezeichnung der Time-of-Flight-Entfernungsbestimmung Bezug genommen. Beispielsweise kann die Entfernung zwischen der UWB-Antenne eines Fahrzeugs und einem für UWB-Kommunikation vorbereiteten portablen ID-Geber ermittelt werden, indem ein UWB-Signal von der UWB-Antenne des Fahrzeugs zu dem portablen ID-Geber gesendet wird, ein UWB-Transceiver des portablen ID-Gebers dieses beantwortet, und nach Empfang des Antwortsignals durch die UWB-Antenne des Fahrzeugs ein mit der UWB-Antenne des Fahrzeugs gekoppeltes Steuermittel die gemessene Laufzeit auswertet. Berücksichtigt werden in diesem Beispiel die Strecke zu dem ID-Geber hin, eine Reaktionszeit innerhalb des ID-Gebers und die Strecke von dem ID-Geber weg zu der UWB-Antenne des Fahrzeugs hin. Wenn, wie in diesem Beispiel, die Laufzeit fahrzeugseitig ausgewertet wird, muss lediglich noch die Reaktionszeit innerhalb des ID-Gebers fahrzeugseitig bekannt sein, so dass eine entsprechende Korrektur der fahrzeugseitig gemessenen Zeit zwischen Aussenden des UWB-Signals und Empfang der UWB-Antwort vorgenommen werden kann.

Erfahrungsgemäß ist die Genauigkeit einer derart vorgenommenen Entfernungsbestimmung auf UWB-Basis bei den üblichen vorgesehenen Größenordnungen von Entfernungen deutlich höher als es bei vielen anderen Verfahren der Fall ist. UWBbasierte Entfernungsbestimmung ist in der Regel genauer als eine Entfernungsbestimmung, die auf Signalstärkebestimmung von LF-Signalen oder auf Triangulation von LF-Signalen basiert. Die Genauigkeit liegt bei den UWB-basierten Entfernungsbestimmungen unter guten Bedingungen in der Größenordnung von zehn bis zwanzig Zentimetern.

Ein großer Vorteil, der sich durch die Nutzung der UWB-Signale ergibt, besteht darin, dass aufgrund der Vielzahl der verwendeten Frequenzen eine vollständige Abschattung der Signale sehr unwahrscheinlich ist. Der Grund dafür ist, dass zumindest für einige der gleichzeitig verwendeten Frequenzen mit sehr hoher Wahrscheinlichkeit immer eine Sichtlinie zwischen Sender und Empfänger besteht. Aufgrund der hohen Zahl unterschiedlicher genutzter Frequenzen können in den meisten Fällen zumindest für manche der genutzten Frequenzen Beugungseffekte und/oder Reflektionen erwartet werden.

Die vorliegende Erfindung nutzt aus, dass die Erfassung desselben ID-Geber-UWB-Signals mit wenigstens zwei UWB-Antennen, nämlich zumindest der ersten UWB-Antenne und der zweiten UWB-Antenne, mit einer nachfolgenden Auswertung durch die zentrale UWB-Steuereinheit zur sicheren Authentifizierung der Kommunikation des Fahrzeugs mit dem ID-Geber beitragen kann. Insbesondere kann die Authentifizierung der Kommunikation zwischen ID-Geber und dem Fahrzeug als Voraussetzung für eine Freigabe einer Fahrzeugfunktion vorgesehen sein, so dass also eine Freigabe einer Fahrzeugfunktion nur unter der Bedingung möglich ist, dass die Kommunikation zwischen ID-Geber und dem Fahrzeug nicht als nicht authentische Kommunikation verworfen wird.Insbesondere kann die zentrale UWB-Steuereinheit eine dahingehende Auswertung vornehmen, ob das erste Empfangssignal und das zweite Empfangssignal unter der Berücksichtigung der voneinander beabstandeten Positionierung der ersten UWB-Antenne von der zweiten UWB-Antenne (die der zentralen Steuereinheit ja bekannt ist) von demselben ID-Geber gleichzeitig ausgesendet sein kann. Die genaue Ausgestaltung dieser Auswertung unterliegt dem fachmännischen Handeln. In die Auswertung kann in einer Variante insbesondere der Abstand der ersten UWB-Antenne von der zweiten UWB-Antenne eingehen, indem berücksichtigt wird, dass der Empfang des ID-Geber-UWB-Signals an der ersten UWB-Antenne und der Empfang des ID-Geber-UWB-Signals an der zweiten UWB-Antenne höchstens einen übertragungsbedingten Laufzeitunterschied aufweisen kann, der dem Abstand der UWB-Antennen voneinander entspricht.

Dadurch, dass die erste UWB-Antenne und die zweite UWB-Antenne voneinander beabstandet sind, kann die UWB-Steuereinheit bei entsprechender Einrichtung in die Auswertung mit einbeziehen, dass aus der Reihenfolge der UWB-Antennen, die nacheinander dasselbe Empfangssignal empfangen, eine Positionierung des ID-Gebers auf einen entsprechenden Teilraum eingeschränkt werden kann. Beispielsweise kann bei einer Kommunikationsanordnung mit zwei UWB-Antennen geschlossen werden, dass der ID-Geber in einem Halbraum befindlich ist, der auch diejenige der beiden UWB-Antennen aufweist, welche als erstes das ID-Geber-UWB-Signal empfangen hat.

Alternativ oder zusätzlich kann bei Einrichtung der zentralen Steuereinheit zur Auswertung der Empfangssignale die Kenntnis über eine Richtungsabhängigkeit der Empfangsempfindlichkeiten der UWB-Antennen eingehen. Das bedeutet, dass beispielsweise die Unterschiede in den erfassten Intensitäten unter Berücksichtigung der unterschiedlichen Orientierung der UWB-Antennen, welche der zentralen UWB-Steuereinheit bekannt ist, ausgewertet werden können.

Die Authentifizierung des ID-Gebers am Fahrzeug, also die Prüfung, ob eine Freigabe von Fahrzeugfunktionen für einen Bediener, der den portablen ID-Geber mit sich führt, kann nach der Sicherstellung, dass die Kommunikation als authentisch angesehen werden kann, also unter der Voraussetzung der erfolgreichen Authentifizierung der Kommunikation, auf beliebige Weise mit einem Authentifizierungssystem des Fahrzeugs auf Basis einer Kommunikation mit dem ID-Geber vorgenommen werden. Hierzu können bekannte Verfahren wie zum Beispiel ein Austausch kryptographischer Informationen zwischen dem Authentifizierungssystem und dem ID-Geber genutzt werden. Der Austausch der kryptographischen Informationen kann beispielsweise mittels UWB-Kommunikation zwischen ID-Geber und einer der UWB-Antennen oder mittels HF-Kommunikation zwischen einer HF-Schnittstelle des ID-Gebers und einer HF-Schnittstelle des Authentifizierungssystems vorgenommen werden. Der Austausch der kryptographischen Informationen kann dabei unabhängig von der oben erläuterten Kommunikation zwischen ID-Geber und Fahrzeug, beispielsweise vorher oder nachher im Rahmen einer eigens durchgeführten UWB- und/oder HF-Kommunikation. Der Austausch der kryptographischen Informationen kann alternativ vollständig oder teilweise im Rahmen der oben erläuterten Kommunikation zwischen ID-Geber und Fahrzeug, also unter Nutzung des ID-Geber-UWB-Signals, durchgeführt werden.

Bei dem ID-Geber-UWB-Signal kann es sich beispielsweise um ein Signal handeln, dass der Bestimmung des Abstands zwischen einer der UWB-Antennen und dem Fahrzeug dient. Alternativ oder zusätzlich kann das ID-Geber-UWB-Signal ein Signal sein, mit dem kryptographische Informationen für eine Authentifizierung des ID-Gebers am Fahrzeug übermittelt werden. Alternativ kann das ID-Geber-Signal auch eigens zu dem Zweck ausgesendet werden, die Authentizität der Kommunikation zu bestätigen, wobei die Authentifizierung des ID-Gebers am Fahrzeug ergänzend zu der Prüfung der Authentizität der Kommunikation vorgenommen wird, beispielsweise mit einer separaten UWB-Kommunikation oder mit einer HF-Kommunikation zwischen einer HF-Schnittstelle des ID-Gebers und einer HF-Schnittstelle des Authentifizierungssystems.

Erfindungsgemäß ist für die Ausbildung des Kommunikationssystems vorgesehen, dass die Richtung einer maximalen Empfangsempfindlichkeit der ersten UWB-Antenne und die Richtung einer maximalen Empfangsempfindlichkeit der zweiten UWB-Antenne in einem Winkel zueinander orientiert sind, der wenigstens 30 Grad beträgt. Mit anderen Worten werden als Bestandteil des Kommunikationssystems UWB-Antennen mit einer gewissen Richtcharakteristik verwendet; die Richtcharakteristik ist dahingehend bei der Positionierung der UWB-Antennen an dem Fahrzeug berücksichtigt, dass die Richtungen zur maximalen Empfangsempfindlichkeit zueinander geneigt orientiert sind, sodass beispielsweise eine von der ersten UWB-Antenne in Richtung der maximalen Empfangsempfindlichkeit der ersten UWB-Antenne gerichtete Halbgerade sowie eine von der zweiten UWB-Antenne ausgehend in Richtung der maximalen Empfangsempfindlichkeit der zweiten UWB-Antenne gerichtete Halbgerade zueinander in einem Winkel orientiert sind, der wenigstens 30 Grad beträgt.

Durch die Abweichung der maximalen Empfangsempfindlichkeiten werden die empfangenen Signalstärken entsprechend beeinflusst.

Gemäß einer weiteren Ausführungsform der Erfindung kann vorgesehen sein, dass die Richtung der maximalen Empfangsempfindlichkeit der ersten UWB-Antenne und die Richtung der maximalen Empfangsempfindlichkeit der zweiten UWB-Antenne in einem Winkel zueinander orientiert sind, der höchstens 120 Grad beträgt.

Die Auswahl und Positionierung der UWB-Antenne zueinander ist in einer bevorzugten Ausführungsform des Kommunikationssystems derart gewählt, dass vor einer Fahrertür des Fahrzeugs ein Überlappungsraum existiert. Innerhalb des Überlappungsraums überschreiten eine Empfangsempfindlichkeit der ersten UWB-Antenne und eine Empfangsempfindlichkeit der zweiten UWB-Antenne an jedem Ort einen Mindestwert, der jedenfalls größer Null ist.

Insbesondere sind
- eine Erstreckung des Überlappungsraums,
- die Auswahl, Positionierung und Orientierung der UWB-Antennen, sowie
- die Auswahl einer UWB-Kommunikationsanordnung des ID-Gebers
derart aufeinander angepasst ausgewählt, dass für einen ID-Geber, der sich innerhalb des Überlappungsraums befindet, eine UWB-Kommunikation sowohl mit der ersten UWB-Antenne als auch mit der zweiten UWB-Antenne durchführbar ist.

Mit anderen Worten ist das Kommunikationssystem mittels der entsprechenden Auswahl und Positionierung der UWB-Antennen derart konfiguriert, dass ein ID-Geber sowohl mit der ersten UWB-Antenne als auch mit der zweiten UWB-Antenne eine UWB-Kommunikation durchführen kann, wenn der ID-Geber sich an einem hierfür vorgesehenen Ort befindet. Der vorgesehene Ort oder die vorgesehenen Orte werden beispielsweise von dem Fahrzeughersteller als solche definiert und mit einem Überlappungsraum von zwei oder mehr UWB-Antennen abgedeckt. Durch die gezielte Ausbildung eines oder mehrerer Überlappungsräume wird sichergestellt, dass die in Abhängigkeit voneinander vorgesehene Auswertung des ersten Empfangssignals und des zweiten Empfangssignals mit der zentralen UWB-Steuereinheit durchführbar ist.

Die gezielte Verwendung von UWB-Antennen mit einer Richtcharakteristik und die gezielte Bereitstellung von Überlappungsräumen gehen mit dem Vorteil einher, dass die UWB-Kommunikation des ID-Gebers mit dem Fahrzeug lokal eingeschränkt ist auf eine oder mehrere Regionen, innerhalb derer der ID-Geber während eines typischen Bedienszenario zu erwarten ist. Die bei vielen UWB-Antennen vorhandene gewisse Richtcharakteristik, mit anderen Worten: anisotrope Empfangsempfindlichkeit, wird also in besonders eleganter und bevorzugter Weise zu einer Bereitstellung einer Kommunikation genutzt, deren Kompromittierbarkeit bereits aufgrund der konzeptionsbedingt begrenzten lokalen Ausformung der Überlappungsbereiche erreicht wird.

Ein weiterer Vorteil der Verwendung von UWB-Antennen mit einer Richtcharakteristik ist, dass eine Verfälschung einer UWB-Laufzeitmessung, beispielsweise durch Reflexionen, erkannt wird. Grund hierfür ist, dass UWB-Antennen mit Richtcharakteristik und bei in einem Winkel zueinander erfolgenden Positionierung der UWB-Antennen die Wahrscheinlichkeit gering ist, dass ein reflektiertes ID-Geber-UWB-Signal von mehreren UWB-Antennen empfangen wird. Ein reflektiertes Signal wird somit mit einer gewissen Wahrscheinlichkeit zu einer Laufzeitdifferenz der an verschiedenen UWB-Antennen erfassten Laufzeitwerte führen, die größer ist als eine nachfolgend noch erläuterte Maximallaufzeit.

Gemäß einer Ausführungsform wird die Kommunikation zwischen ID-Geber und dem Fahrzeug als nicht authentische Kommunikation verworfen, wenn nur genau eine der UWB-Antennen ein Empfangssignal des ID-Geber-UWB-Signals verzeichnet. Denn in einem solchen Fall kann nicht sichergestellt werden, dass keine Manipulation des Signals vorliegt. Hingegen lässt sich bei Empfang nur mit einer UWB-Antenne schließen, dass der Bediener sich mit hoher Wahrscheinlichkeit nicht in einem Überlappungsraum befindet, der von dem Anbieter des Fahrzeugs als Position des Bedieners bei Freigabe der Position vorgesehen ist.

Alternativ oder zusätzlich ist die UWB-Steuereinheit gemäß einer vorteilhaften Ausführungsform eingerichtet, einen ersten Laufzeitwert des ersten Empfangssignals und einen zweiten Laufzeitwert des zweiten Empfangssignals mittels N-Lateration auszuwerten, wobei N die Anzahl der UWB-Antennen ist, die ein Empfangssignal desselben ID-Geber-UWB-Signals erfassen. Das bedeutet beispielsweise bei zwei vorhandenen UWB-Antennen, dass eine Bilateration zur Auswertung der ersten Laufzeit und der zweiten Laufzeit vorgenommen wird. In dem Fall, dass drei UWB-Antennen vorhanden sind und ein Empfangssignal erfassen, wird eine Trilateration vorgenommen, usw.

Um einen Laufzeitwert eines UWB-Signals auswerten zu können, wird bevorzugt zunächst ein Fahrzeug-UWB-Signal an den ID-Geber gesendet. Daraufhin sendet der ID-Geber das UWB-Signal als Antwort. Dies ermöglicht einem kraftfahrzeugseitigen Steuergerät, beispielsweise der UWB-Steuereinheit, die Auswertung der UWB-Kommunikation über die Gesamtstrecke Fahrzeug->ID-Geber->Fahrzeug. Besonders bevorzugt wird eine der erfindungsgemäß vorhandenen UWB-Antennen für das Aussenden des Fahrzeug-UWB-Signals verwendet.

Erfindungsgemäß ist die UWB-Steuereinheit eingerichtet, dass die Auswertung des ersten Empfangssignals und des zweiten Empfangssignals in Abhängigkeit voneinander umfasst, dass ein erster Laufzeitwert des ersten Empfangssignals und ein zweiter Laufzeitwert des zweiten Empfangssignals bestimmt wird und die Kommunikation des Fahrzeugs mit dem ID-Geber als nicht-authentische Kommunikation verworfen wird , wenn ein Betrag einer Laufzeitdifferenz zwischen dem ersten Laufzeitwert und dem zweiten Laufzeitwert eine Maximallaufzeit um mehr als eine tolerierte Abweichung überschreitet.

Gemäß einer Variante wird Kommunikation zwischen Fahrzeug und ID-Geber als nicht-authentische Kommunikation verworfen, wenn der Betrag der Laufzeitdifferenz zwischen dem ersten Laufzeitwert und dem zweiten Laufzeitwert die Maximallaufzeit um mehr als die tolerierte Abweichung überschreitet, und im anderen Fall die Kommunikation zwischen Fahrzeug und ID-Geber als authentische, das heißt: nicht korrumpierte, Kommunikation angenommen, die Authentifizierung der Kommunikation gilt also als erfolgreich.

Gemäß einer Variante kann vorgesehen sein, dass die Authentifizierung der Kommunikation erst als erfolgreich gilt, wenn zusätzlich weitere Bedingungen erfüllt sind, wobei der Fachmann eine Anzahl von weiteren Prüfungsinstanzen vorsehen kann.

Die Maximallaufzeit ist die Zeitdauer, welche elektromagnetische Wellen für das Zurücklegen des Abstands zwischen der ersten UWB-Antenne und der zweiten UWB-Antenne benötigen. Es wird also der trigonometrische Sachverhalt ausgenutzt, dass ein Laufwegunterschied desselben UWB-Signals von dem ID-Geber zu zwei voneinander beabstandeten UWB-Antennen für alle möglichen Positionen des ID-Gebers maximal dem Abstand der zwei UWB-Antennen voneinander entspricht. Mit anderen Worten: Es werden die Laufzeiten, alternativ oder zusätzlich die Empfangszeitpunkte, an der Position der ersten UWB-Antenne und der Position der zweiten UWB-Antenne miteinander verglichen und die Differenz zwischen beiden daraufhin geprüft, ob diese mit Hinblick auf den Abstand der ersten UWB-Antenne von der zweiten UWB-Antenne plausibel sind, das heißt, dass eine Laufzeitdifferenz zwischen einer Laufzeit an der ersten UWB-Antenne und einer Laufzeit an der zweiten UWB-Antenne höchstens dem Abstand zwischen der ersten und der zweiten UWB-Antenne entspricht. Um eventuelle Rechenzeiten oder Ungenauigkeiten der Erfassung der Zeitpunkte oder deren elektronischer Weiterbearbeitung abfedern zu können, ist in einer Variante eine tolerierte Abweichung vorgesehen. Die tolerierte Abweichung definiert einen Toleranzbereich und kann beispielsweise 20 Prozent der Mindestlaufzeit betragen, der zusätzlich zu der Maximallaufzeit erlaubt ist.

Als Laufzeitwert des Empfangssignals kann eine Laufzeit "Aussendezeitpunkt des Abfragesignals der aussendenden UWB-Antenne -> Beantwortung mit ID-Geber-UWB-Signal durch ID-Geber - > Empfangszeitpunkt des Empfangs durch empfangende UWB-Antenne" vorgesehen sein.

Als Laufzeitwert des Empfangssignals kann eine Laufzeit "ID-Geber-UWB-Signal durch ID-Geber -> Empfangszeitpunkt des Empfangs durch empfangende UWB-Antenne" vorgesehen sein.

Alternativ kann als Laufzeitwert ein Empfangszeitpunkt des Empfangs des ID-Geber-UWB-Signals an der jeweiligen empfangenden UWB-Antenne vorgesehen sein.

Dadurch, dass die Laufzeitwerte mit Bezug zu zwei voneinander beabstandeten UWB-Antennen, aber basierend auf dem Empfang desselben Signals, nämlich des ID-Geber-UWB-Signals ermittelt werden, sind alle oben genannten Varianten des Laufzeitswerts gleichwertig und führen bei Bildung einer Differenz zumindest bei einer Idealbetrachtung zu derselben Laufzeitdifferenz. Eventuelle, beispielsweise gerätebedingte, geringfügige Abweichungen von der Idealbetrachtung können bei konkreter Umsetzung der Erfindung mit den vorgesehenen tolerierten Abweichungen Berücksichtigung finden.

Gemäß einer bevorzugten Ausführungsform des Kommunikationssystems ist die UWB-Steuereinheit eingerichtet, im Rahmen der Auswertung des ersten Empfangssignals und des zweiten Empfangssignals in Abhängigkeit voneinander
- für jedes der Empfangssignale einen Laufzeitwert zu ermitteln und aus den ermittelten Laufzeitwerten einen Laufzeitmittelwert zu berechnen, und/oder
- für jedes der Empfangssignale einen Signalstärkewert, beispielsweise einen RSSI-Wert, zu ermitteln und aus den ermittelten Signalstärkewerten einen Signalstärkemittelwert zu berechnen,
wobei aus dem Laufzeitmittelwert und/oder aus dem Signalstärkemittelwert ein UWB-Entfernungswertsmittelwert abgeleitet wird. Der Entfernungswertsmittelwert ist bevorzugt ein Mittelwert aus den bestimmten Entfernungen, wobei die Entfernung des ID-Gebers zu jeder der UWB-Antennen die ein Empfangssignal erfasst haben über die Laufzeit des UWB-Signals ermittelt wird. Bevorzugt wird nur eine der vorhandenen UWB-Antennen zum Senden eines anfragenden UWB-Signals verwendet, sodass die Laufzeit auf dem Hinweg zu dem ID-Geber dieselbe ist und nur die Laufzeit des ID-Geber-UWB-Signals auf dem Weg vom ID-Geber zu der jeweiligen UWB-Antenne unterschiedlich ist. Da die UWB-Steuereinheit weiß, von welcher der UWB-Antennen aus das Anfragesignal gesendet wurde, kann die UWB-Steuereinheit die Entfernung des ID-Gebers für jedes Empfangssignal ermitteln, solange eine der empfangenden UWB-Antennen auch das anfragende Signal gesendet hat. Bevorzugt wird die Anfrage sooft wiederholt, bis die anfragende Antenne auch ein Empfangssignal erfassen konnte. Alternativ kann aber auch die Entfernung aus der Laufzeit "anfragende Antenne -> ID-Geber -> empfangende Antenne" für unterschiedliche empfangende Antennen aber dieselbe anfragende Antenne ermittelt werden, wobei die Ungenauigkeit in der Entfernungsermittlung, die sich aus der wiederholten Berücksichtung der anfragenden Antenne ergibt, vernachlässigt wird, da sie im Vergleich zur Entfernungsermittlungsgenauigkeit mit anderen Verfahren, beispielsweise mit LF-Signalstärken, als vernachlässigbar angesehen wird. Unabhängig davon wird mittels einer LF-Empfangseinheit des Fahrzeugs ein LF-Abstandswert aus einer Signalstärke, beispielsweise einer RSSI-Signalstärke, eines erfassten LF-Signals des ID-Gebers bestimmt und an die UWB-Steuereinheit übermittelt. Die LF-Empfangseinheit ist mit der UWB-Steuereinheit gekoppelt und kann entweder Bestandteil des Kommunikationssystems sein oder kein Bestandteil des Kommunikationssystems sein. Die Kommunikation des Fahrzeugs mit dem ID-Geber wird seitens der UWB-Steuereinheit als nicht-authentische Kommunikation verworfen, wenn der LF-Abstandswert und der UWB-Entfernungswertsmittelwert über eine tolerierte Maximalabweichung hinaus voneinander abweichen. Mit anderen Worten wird eine in der Regel gegenüber einer UWB-Entfernungsbestimmung ungenauere auf LF-Signalstärke basierende Abstandsinformation mit aus der UWB-Kommunikation abgeleiteten Abstandsinformationen verglichen. Der Vergleich trägt zur Authentifizierung der Kommunikation zwischen ID-Geber und Fahrzeug durch Konsistenzprüfung der ermittelten Abstandsinformationen bei. Dadurch, dass sowohl auf einer LF-Signalstärke als auch auf einer UWB-Laufzeit basierende Entfernungswerte erfasst werden, ist eine Kompromittierung derKommunikation, wenn überhaupt, nur noch mit sehr großem Aufwand möglich. Dadurch, dass ein Mittelwert über Entfernungswerte von allen ein UWB-Signal empfangenen UWB-Antennen berücksichtigt wird, wird ein potentieller Einfluss von eventuell vorhandenen Reflektionen einzelner Wellen des UWB-Signals reduziert.

Es kann vorgesehen sein, dass die Kommunikation zwischen Fahrzeug und ID-Geber genau dann als authentisch gilt, wenn sie nicht gemäß einer oder mehrerer der obigen Vorgehensweisen als nicht-authentisch verworfen ist. Alternativ können zusätzliche Prüfungsinstanzen vorgesehen sein.

Als tolerierte Maximalabweichung können beispielsweise 30 Prozent, bevorzugt 10 Prozent, des berechneten UWB-Entfernungswertsmittelwerts dienen.

Gemäß einer weiteren bevorzugten Ausführungsform des Kommunikationssystems ist die erste UWB-Antenne in einer ersten Handhabe an einer Fahrertür des Fahrzeugs angeordnet. Alternativ oder zusätzlich ist die zweite UWB-Antenne in einer zweiten Handhabe an einer Beifahrertür des Fahrzeugs angeordnet. Die Anordnung einer oder mehrerer UWB-Antennen innerhalb einer Handhabe eines Fahrzeugtürgriffs geht mit dem Vorteil einher, dass die UWB-Antenne auf elegante Weise außerhalb der Blechummantelung des Fahrzeugs angeordnet ist. Dadurch wird eine energieeffizientere und qualitativ verbesserte UWB-Kommunikation erreicht. Bei Anordnung der UWB-Antenne an dem Fahrzeugtürgriff oder innerhalb des Fahrzeugtürgriffs wird der weitere Vorteil erreicht, dass ein Bediener, der einen Zutritt zu dem Fahrzeug anstrebt, sich hierfür in der Regel zu dem Fahrertürgriff hinbewegt. Durch die typische Bediensituation werden gute Bedingungen für eine Funkkommunikation zwischen dem ID-Geber, der in Besitz des Bedieners ist, und der UWB-Schnittstelle erwartet.

Die Anordnung der UWB-Antennen innerhalb der Handhaben hat außerdem den Vorteil einer weiten Beabstandung der UWB-Antennen am Fahrzeug zur Folge, wodurch sich ein vergleichsweise großer Laufzeitunterschied aus den Zeitpunkten des Empfangs des UWB-Signals an den in den unterschiedlichen Handhaben vorhandenen UWB-Antennen ergibt mit dem Vorteil eines geringeren relativen Fehlers in der Bestimmung der Laufzeitdifferenz.

Nicht zuletzt kann bei Anordnung der UWB-Antenne innerhalb einer Handhabe auf die in modernen Handhaben ohnehin vorhandene Elektronik zurückgegriffen werden, woraus sich ein Kostenvorteil ergibt.

Bevorzugt ist vorgesehen, dass die UWB-Antenne und der UWB-Empfänger Bestandteil eines UWB-Transceivers sind. Dies hat den Vorteil einer einfachen und kostengünstigen Implementierung.

Bevorzugt weist das Kommunikationssystem wenigstens drei, besonders bevorzugt genau vier, voneinander beabstandete UWB-Antennen auf.

Besonders bevorzugt weist das Kommunikationssystem vier voneinander beabstandete UWB-Antennen auf, wobei die Richtungen einer maximalen Empfangsempfindlichkeit jeweils senkrecht zueinander orientiert und parallel zu einer Fahrebene des Fahrzeugs liegend, bevorzugt außerdem in einer Ebene liegend, ausgerichtet sind.

Ein Gedanke der Erfindung betrifft ein Berechtigungssystem aus ID-Geber und Kommunikationssystem, wobei der ID-Geber und das Kommunikationssystem entsprechend der obigen Erläuterung zur UWB-Kommunikation miteinander eingerichtet sind.

Weitere Einzelheiten, Merkmale und Vorteile des Gegenstands der Erfindung ergeben sich aus der nachfolgenden Beschreibung im Zusammenhang mit den Zeichnungen. In den Zeichnungen ist beispielhaft ein Ausführungsbeispiel der Erfindung dargestellt.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind.

Es zeigen:
Fig. 1: Eine schematische Prinzipskizze eines erfindungsgemäßen Kommunikationssystems;
Fig. 2: Eine weitere schematische Prinzipskizze des erfindungsgemäßen Kommunikationssystems der Fig. 1.

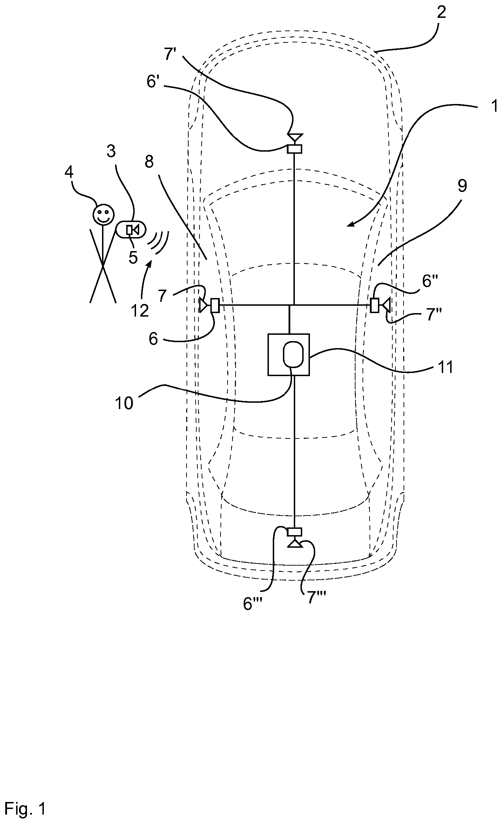

Fig. 1 ist ein Ausführungsbeispiel eines Kommunikationssystems 1 zu entnehmen. Die einzelnen baulichen Bestandteile des Kommunikationssystems 1 sind an einem Fahrzeug 2 angeordnet. Mit dem Kommunikationssystem 1 wird das Fahrzeug 2 zumindest zu einer UWB-Kommunikation mit einem portablen ID-Geber 3 befähigt. Die UWB-Kommunikation dient beispielsweise der Freischaltung von Fahrzeugfunktionen für einen Bediener 4, der den ID-Geber 3 mit sich führt. Der ID-Geber 3 ist portabel, also von dem Bediener 4 ohne Hilfsmittel mitführbar. Der ID-Geber 3 ist außerdem zur UWB-Kommunikation eingerichtet. Der ID-Geber 3 weist also Kommunikationsmittel auf, welche den ID-Geber 3 unter anderem zur UWB-Kommunikation befähigen. Beispielsweise kann es sich bei diesen Kommunikationsmitteln um einen UWB-Transceiver 5 handeln, der eine UWB-Antenne aufweist. Der ID-Geber 3 ist kein Bestandteil des Kommunikationssystems 1 der vorliegenden Erfindung. ID-Geber 3 und Kommunikationssystem 1 sind jedoch zur UWB-Kommunikation miteinander eingerichtet, das heißt, dass alle erforderlichen hard- und softwaremäßigen Voraussetzungen vorliegen, dass der Bediener 4 sich mittels des ID-Gebers 3 unter Nutzung einer UWB-Kommunikation zwischen ID-Geber 3 und Kommunikationssystem 1 an dem Fahrzeug als zur Funktionsgewährung berechtigt authentifizieren kann.

Das Kommunikationssystem 1 weist einen ersten UWB-Empfänger 6 auf, der mit einer ersten UWB-Antenne 7 gekoppelt ist. Weiterhin sind ein zweiter UWB-Empfänger 6' mit einer zweiten UWB-Antenne 7' sowie zwei weitere UWB-Empfänger 6", 6‴ mit jeweils einer weiteren UWB-Antenne 7 ", 7‴ an dem Fahrzeug angeordnet. Die UWB-Antennen 7, 7', 7 ", 7‴ sind voneinander beabstandet an dem Fahrzeug 2 angeordnet. Insbesondere ist die erste UWB-Antenne 7 in der gezeigten Ausführungsform in einer ersten Handhabe an einer Fahrertür 8 angeordnet und ist die dritte UWB-Antenne 7" in einer zweiten Handhabe an einer Beifahrertür 9 angeordnet. Die Handhaben sind aufgrund der schematischen Darstellung nicht dargestellt.

Die UWB-Empfänger 6, 6', 6", 6‴ sind mit einer zentralen UWB-Steuereinheit 10 des Fahrzeugs 2 gekoppelt, wobei die Kopplung in dem gezeigten Beispiel drahtgebunden ausgeführt ist. Die zentrale UWB-Steuereinheit 10 des Fahrzeugs 2 ist in der dargestellten Ausführungsform Bestandteil einer zentralen Steuereinheit 11 des Fahrzeugs 2. Es ist aber ebenso denkbar, dass die UWB-Steuereinheit 10 als von der zentralen Steuereinheit 11 getrennte Einheit ausgeführt ist.

Wenn der Bediener 4 sich dem Fahrzeug nähert, wird als Voraussetzung für eine Freigabe von Funktionen des Fahrzeugs 2 für den Bediener 4 eine Authentifizierung des Bedieners 4 durchgeführt. Dies erfolgt zunächst beispielsweise entsprechend einer aus der Praxis bekannten Vorgehensweise. Eine solche bekannte Verfahrensfolge sieht beispielsweise vor, dass zunächst ein niederfrequentes LF-Wecksignal von dem Fahrzeug 2 ausgesendet wird. Durch das LF-Wecksignal wird der ID-Geber 3, der zum Empfang von LF-Wecksignalen vorbereitet ist, aus einem Energiesparmodus in einen aktiven Modus versetzt. Der ID-Geber 3 veranlasst in Reaktion auf das LF-Wecksignal eine UWB-Kommunikation mit dem kraftfahrzeugseitigen Steuergerät 11. Die UWB-Kommunikation erfolgt mittels des UWB-Transceivers 5 des ID-Gebers 3. Im Zuge der UWB-Kommunikation zwischen dem ID-Geber 3 und dem kraftfahrzeugseitigen Steuergerät 11 erfolgt beispielsweise ein gegenseitiger Austausch verschlüsselter Informationen und deren Verifizierung durch den jeweils anderen beteiligten Kommunikationspartner. Alternativ ist natürlich auch denkbar, dass die UWB-Kommunikation vom fahrzeugseitigen zentralen Steuergerät 11 oder vom UWB-Steuergerät 10 veranlasst wird in Reaktion auf eine LF- oder HF-Anfrage des ID-Gebers.

Während der UWB-Kommunikation sendet der ID-Geber 3 ein ID-Geber-UWB-Signal 12 aus. In vielen Fällen ist das ID-Geber-UWB-Signal 12 die Antwort auf ein Fahrzeug-UWB-Signal. Sowohl die erste UWB-Antenne 7, die mit dem ersten UWB-Empfänger 6 gekoppelt ist, als auch die zweite UWB-Antenne 7', die mit dem zweiten UWB-Empfänger 6` gekoppelt ist, empfangen das ID-Geber-UWB-Signal 12. Das von dem ersten UWB-Empfänger 6 empfangene erste Empfangssignal des ID-Geber-UWB-Signals 12 und das von dem zweiten UWB-Empfänger 6` empfangene zweite Empfangssignal des ID-Geber-UWB-Signals 12 werden zu der zentralen UWB-Steuereinheit 10 übermittelt. Die zentrale UWB-Steuereinheit wertet beide Signale gemeinsam auf Plausibilität hin aus.

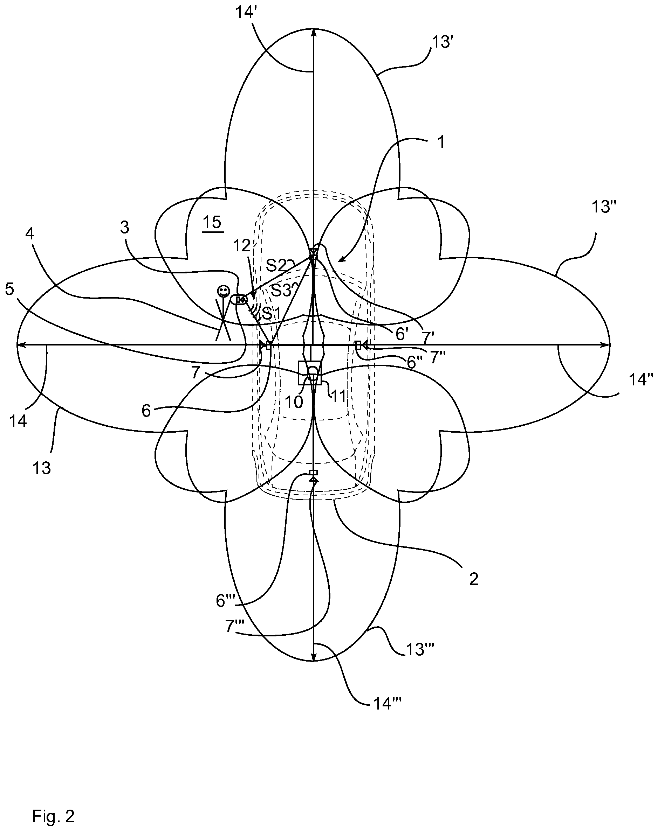

In Fig. 2 sind die Grenzlinien der Empfangsfähigkeit der ersten UWB-Antenne 13, der zweiten UWB-Antenne 13`, der dritten UWB-Antenne 13'' sowie der vierten UWB-Antenne 13‴ dargestellt. Außerhalb der dargestellten Grenzlinien ist eine UWB-Kommunikation des konkreten ID-Gebers 3 mit der konkreten UWB-Antenne nicht mehr möglich, der Verlauf der Grenzlinien ist also stets von der konkreten Ausführung der einzelnen Bestandteile des Kommunikationssystems 1 und des ID-Gebers abhängig, wobei das Kommunikationssystem zur Verwendung mit einem entsprechend geeigneten ID-Geber eingerichtet ist. Der jeweils am weitesten von der UWB-Antenne entfernteste Punkt der Empfangsfähigkeit definiert ausgehend von der jeweiligen UWB-Antenne die Richtung einer maximalen Empfangsempfindlichkeit. Diese Richtungen sind durch die Pfeile 14, 14', 14", 14‴ symbolisiert. Es ist zu erkennen, dass die UWB-Antennen 7, 7', 7'', 7‴ eine ausgeprägte Richtcharakteristik haben, wobei die Richtung der maximalen Empfangsempfindlichkeit in dem gezeigten Ausführungsbeispiel eine Symmetrieachse einer Hauptkeule der jeweiligen UWB-Antenne 7, 7', 7'', 7‴ ist. In der dargestellten Ausführungsform sind die Richtungen der maximalen Empfangsempfindlichkeit zweier benachbarter UWB-Antennen infolge der Auswahl der UWB-Antennen, der Orientierung der UWB-Antennen und derer Positionierung am Fahrzeug jeweils senkrecht zueinander orientiert.

Weiterhin ist zu erkennen, dass zwei benachbarte UWB-Antennen in der gezeigten Ausgestaltung jeweils einen Überlappungsraum bereitstellen. Beispielsweise bilden die Regionen mit einer Mindestempfangsempfindlichkeit der ersten Antenne 7 und der zweiten Antenne 7' einen Überlappungsraum 15, innerhalb dessen sowohl die erste UWB-Antenne 7 als auch die zweite UWB-Antenne 7' ein ausgesendetes UWB-Signal des ID-Gebers 3 empfangen können. Mit anderen Worten ist infolge der Auswahl, Positionierung und Orientierung der UWB-Antennen sowie der Auswahl einer UWB-Kommunikationsanordnung des ID-Gebers innerhalb des Überlappungsraums 15 eine UWB-Kommunikation des ID-Gebers 3 mit dem Fahrzeug 2 sowohl über die erste UWB-Antenne 7 als auch über die zweite UWB-Antenne 7' durchführbar. Selbstverständlich sind Auswahl, Positionierung und Orientierung der Antennen durch den Fachmann abwandelbar, beispielsweise können auch Orientierungen, Auswahl und Positionierungen vorgesehen sein, bei denen Überlappungsräume existieren, innerhalb derer eine Kommunikation mit allen vorhandenen UWB-Antennen möglich ist. Entsprechend der vorstehenden Erläuterungen ist die konkrete Dimensionierung des Überlappungsraums also sowohl von der konkreten Art und Positionierung der UWB-Antennen als auch von der Auswahl des ID-Gebers abhängig. Da der berechtigte ID-Geber 3 dem Fahrzeug 2 jedoch ohnehin bekannt sein muss, kann der Fachmann die Auswahl und Positionierung sowie die Ansteuerung der UWB-Antennen in Kenntnis eines Typs oder mehrerer Typen von ID-Gebern vornehmen, ohne dass dies eine besondere Schwierigkeit für ihn darstellen würde.

Dadurch, dass eine UWB-Kommunikation des ID-Gebers 3 innerhalb des Überlappungsraums 15 sowohl mit der ersten UWB-Antenne 7 als auch mit der zweiten UWB-Antenne 7' möglich ist, werden dem zentralen UWB-Steuergerät 10 sowohl ein erstes Empfangssignal des ID-Geber-UWB-Signals 12 als auch ein zweites Empfangssignal des ID-Geber-UWB-Signals 12 bereitgestellt. Die zentrale UWB-Steuereinheit 10 wird dadurch befähigt, das empfangene ID-Geber-UWB-Signal 12 entsprechend ihrer Einrichtung auf seine Authentizität hin auszuwerten und sowohl das erste als auch des zweite Empfangssignal desselben ID-Geber-UWB-Signals 12 bei der Auswertung berücksichtigen.

Der Überlappungsraum 15 ist in der dargestellten Ausführungsform derart durch den mit der Bereitstellung des erfindungsgemäßen Gegenstands beauftragten Fachmann angepasst, dass die Kommunikation des ID-Geber-UWB-Signals mit der ersten UWB-Antenne 7 und der zweiten UWB-Antenne 7' an einer Position des Bedieners 4 möglich ist, welche dieser einnimmt, wenn er sich der Fahrertür 8 nähert. Auf eine eng definierte Begrenzung des Überlappungsraums 15 kommt es dabei nicht an, solange sichergestellt ist, dass im Zuge des von den Entwicklern vorgesehenen Bedienverhaltens ein von dem ID-Geber 3 ausgesendetes ID-Geber-UWB-Signal mit für eine Kommunikation und für eine Signalauswertung ausreichender Signalstärke sowohl an der ersten UWB-Antenne 7 als auch an der zweiten UWB-Antenne 7' empfangen wird. Dadurch wird gewährleistet, dass bei einem natürlichen Bedienverhalten des Bedieners 4 die erfindungsgemäß eingerichteten Vorgaben der zentralen UWB-Steuereinheit 10 durch diese umgesetzt werden können.

Insbesondere ist in der gezeigten Ausführungsform vorgesehen, dass eine Kommunikation des Fahrzeugs 2 mit dem ID-Geber 3 als nicht-authentische Kommunikation verworfen wird, wenn eine Laufzeitdifferenz eines Laufzeitwerts des UWB-Signals auf Strecke S1 und des UWB-Signals auf der Strecke S2 größer ist als ein dem Abstand zwischen der ersten Antenne 7 und der zweiten Antenne 7', S3, entsprechender Laufzeitwert. Denn in diesem Fall kann geschlossen werden, dass wenigstens eines der UWB-Signale eine andere Strecke als die Strecke S1 oder die Strecke S2 zurückgelegt hat oder es zu einer Manipulation eines der Signale gekommen sein könnte.

Es ist also ein Kommunikationssystem 1 eines Fahrzeugs 2 in einer bevorzugten Ausführungsform dargestellt, wobei die bevorzugte Ausführungsform vier voneinander beabstandete UWB-Antennen 7, 7', 7 ", 7‴ aufweist, deren Richtungen einer maximalen Empfangsempfindlichkeit senkrecht zueinander orientiert und parallel zu einer Fahrebene des Fahrzeugs 2 liegend gewählt sind. Jeweils zwei einander benachbarte UWB-Antennen bilden einen Überlappungsraum, wobei der jeweilige Überlappungsraum gewährleistet, dass ein nahe des Fahrzeugs befindlicher ID-Geber 3 eine UWB-Kommunikation mit dem Fahrzeug 2 über wenigstens zwei der UWB-Antennen des Fahrzeugs 2 durchführen kann. Dadurch wird gewährleistet, dass eine verbesserte Sicherheit vor einer Kompromittierung einer Authentifizierung des ID-Gebers 3 erreicht wird.

Für eine konkrete Ausgestaltung bieten sich dem mit der Implementierung betrauten Fachmann viele Methoden zur Umsetzung des erfindungsgemäßen Kommunikationssystems an. Insbesondere können durch gezielte Auswahl der Antennen, gezielte Anordnung der Antennen am Fahrzeug und auf gewünschte Anwendungsfälle hin optimierte Empfangscharakteristika der einzelnen UWB-Antennen, erfindungsgemäß als Überlappungsräume bezeichnete Umgebungsräume bereitgestellt werden, innerhalb derer ein ID-Geber-UWB-Signal von zwei oder mehr als zwei UWB-Antennen empfangen wird.

Zur Validierung des empfangenen Signals sind verschiedene Methoden zur Prüfung der der Authentizität der Kommunikation des Fahrzeugs 2 mit dem ID-Geber 3 implementierbar, wobei je nach Sicherheitsanforderungen die gleichzeitige Erfüllung mehrerer Bedingungen als Voraussetzung für eine Gewährung von einer Freigabe von Fahrzeugfunktionen dienen kann.

## Patentansprüche

1. Kommunikationssystem (1) eines Fahrzeugs (2) für die Kommunikation des Fahrzeugs (2) mit einem portablen ID-Geber (3), der zur UWB-Kommunikation eingerichtet ist, zur Freigabe von Fahrzeugfunktionen für einen Bediener (4), der den portablen ID-Geber (3) mit sich führt,
wobei das Kommunikationssystem (1) wenigstens einen ersten UWB-Empfänger (6) mit einer ersten UWB-Antenne (7) und einen zweiten UWB-Empfänger (6') mit einer zweiten UWB-Antenne (7') aufweist,
wobei die erste UWB-Antenne (7) und die zweite UWB-Antenne (7') voneinander beabstandet an dem Fahrzeug (2) angeordnet sind,
wobei die Richtung einer maximalen Empfangsempfindlichkeit der ersten UWB-Antenne (7) und die Richtung einer maximalen Empfangsempfindlichkeit der zweiten UWB-Antenne (7') in einem Winkel zueinander orientiert sind, der wenigstens 30 Grad beträgt und/oder die Richtung einer maximalen Empfangsempfindlichkeit der ersten UWB-Antenne (7) und die Richtung einer maximalen Empfangsempfindlichkeit der zweiten UWB-Antenne (7') in einem Winkel zueinander orientiert sind, der höchstens 120 Grad beträgt,
wobei eine zentrale UWB-Steuereinheit (10) des Fahrzeugs (2) mit dem ersten UWB-Empfänger (6) und mit dem zweiten UWB-Empfänger (6`) gekoppelt ist,
wobei die zentrale UWB-Steuereinheit (10) eingerichtet ist, sowohl ein von der ersten UWB-Antenne (7) empfangenes erstes Empfangssignal eines ID-Geber-UWB-Signals (12) als auch ein von der zweiten UWB-Antenne (7') empfangenes zweites Empfangssignal des ID-Geber-UWB-Signals (12) in Abhängigkeit voneinander auszuwerten für eine Authentifizierung der Kommunikation des Fahrzeugs (2) mit dem ID-Geber (3),
die UWB-Steuereinheit (10) eingerichtet ist, einen ersten Laufzeitwert des ersten Empfangssignals und einen zweiten Laufzeitwert des zweiten Empfangssignals zu bestimmen, wobei die Kommunikation zwischen ID-Geber (3) und dem Fahrzeug (2) als nicht authentische Kommunikation verworfen wird, wenn eine Laufzeitdifferenz des ersten Laufzeitwerts und des zweiten Laufzeitwerts eine Maximallaufzeit um mehr als eine tolerierte Abweichung überschreitet, wobei die Maximallaufzeit die für das Zurücklegen des Abstands zwischen der ersten UWB-Antenne (7) und der zweiten UWB-Antenne (7') benötigte Zeitdauer ist.

2. Kommunikationssystem (1) nach Anspruch 1, **dadurch gekennzeichnet, dass** vor einer Fahrertür (8) des Fahrzeugs ein Überlappungsraum (15) existiert, innerhalb dessen eine Empfangsempfindlichkeit der ersten UWB-Antenne (7) und eine Empfangsempfindlichkeit der zweitem UWB-Antenne (7') an jedem Ort einen Mindestwert überschreiten, wobei
- eine Erstreckung des Überlappungsraums (15),
- die Auswahl, Positionierung und Orientierung der UWB-Antennen (7, 7', 7", 7‴), sowie
- die Auswahl einer UWB-Kommunikationsanordnung des ID-Gebers (3)
derart aufeinander angepasst sind, dass für den ID-Geber (3) eine UWB-Kommunikation des ID-Gebers (3) mit dem Fahrzeug sowohl über die erste UWB-Antenne (7) als auch über die zweite UWB-Antenne (7') durchführbar ist zumindest dann, wenn der ID-Geber innerhalb des Überlappungsraums (15) positioniert ist.

3. Kommunikationssystem (1) nach einem der vorhergehenden Ansprüche, **dadurch gekennzeichnet, dass** die UWB-Steuereinheit (10) eingerichtet ist, einen ersten Laufzeitwert des ersten Empfangssignals und einen zweiten Laufzeitwert des zweiten Empfangssignals mittels N-Lateration auszuwerten.

4. Kommunikationssystem (1) nach einem der vorhergehenden Ansprüche, **dadurch gekennzeichnet, dass** die UWB-Steuereinheit (10) eingerichtet ist,
- für jedes der erfassten Empfangssignale einen Laufzeitwert zu ermitteln und aus den ermittelten Laufzeitwerten einen Laufzeitmittelwert zu berechnen, und/oder
- für jedes der erfassten Empfangssignale einen Signalstärkewert zu ermitteln und aus den ermittelten Signalstärkewerten einen Signalstärkemittelwert zu berechnen,
wobei aus dem Laufzeitmittelwert und/oder dem Signalstärkemittelwert ein UWB-Entfernungswertsmittelwert abgeleitet wird,
wobei ein LF-Abstandswert aus einer Signalstärke eines erfassten LF-Signals des ID-Gebers bestimmt wird, wobei die Kommunikation zwischen ID-Geber (3) und dem Fahrzeug (2) als nicht authentische Kommunikation verworfen wird, wenn der LF-Abstandswert und der UWB-Entfernungswertsmittelwert über eine tolerierte Maximalabweichung hinaus voneinander abweichen.

5. Kommunikationssystem (1) nach Anspruch 4, **dadurch gekennzeichnet, dass** die tolerierte Maximalabweichung kleiner ist als 30 Prozent, bevorzugt kleiner als 10 Prozent, des berechneten UWB-Entfernungswertsmittelwerts.

6. Kommunikationssystem (1) nach einem der vorhergehenden Ansprüche, **dadurch gekennzeichnet, dass** die UWB-Steuereinheit (10) eingerichtet ist, die Kommunikation zwischen ID-Geber (3) und dem Fahrzeug (2) als nicht authentische Kommunikation zu verwerfen, wenn nur genau eine der UWB-Antennen ein Empfangssignal des ID-Geber-UWB-Signals verzeichnet.

7. Kommunikationssystem (1) nach einem der vorhergehenden Ansprüche, **dadurch gekennzeichnet, dass** die erste UWB-Antenne (7) in einer ersten Handhabe an einer Fahrertür (8) des Fahrzeugs (2) angeordnet ist und/oder die zweite UWB-Antenne (7') in einer zweiten Handhabe an einer Beifahrertür (9) des Fahrzeugs (2) angeordnet ist.

8. Kommunikationssystem (1) nach einem der vorhergehenden Ansprüche, **dadurch gekennzeichnet, dass** wenigstens drei, bevorzugt wenigstens vier, voneinander beabstandete UWB-Antennen (7, 7', 7", 7‴) an dem Fahrzeug (2) angeordnet sind.

9. Kommunikationssystem nach Anspruch 8, **dadurch gekennzeichnet, dass** vier voneinander beabstandete UWB-Antennen (7, 7', 7", 7‴) an dem Fahrzeug (2) angeordnet sind, wobei die Richtungen einer maximalen Empfangsempfindlichkeit jeweils senkrecht zueinander orientiert und parallel zu einer Fahrebene des Fahrzeugs liegend gewählt sind.

## Claims

1. Communication system (1) of a vehicle (2) for the communication of the vehicle (2) with a portable ID transmitter (3), which is set up for UWB communication, for enabling vehicle functions for an operator (4) who carries the portable ID transmitter (3) with him,
wherein the communication system (1) comprises at least a first UWB receiver (6) with a first UWB antenna (7) and a second UWB receiver (6') with a second UWB antenna (7'),
wherein the first UWB antenna (7) and the second UWB antenna (7') are arranged at a distance from one another on the vehicle (2),
wherein the direction of a maximum reception sensitivity of the first UWB antenna (7) and the direction of a maximum reception sensitivity of the second UWB antenna (7') are oriented at an angle to each other which is at least 30 degrees and/or the direction of a maximum reception sensitivity of the first UWB antenna (7) and the direction of a maximum reception sensitivity of the second UWB antenna (7') are oriented at an angle to each other which is at most 120 degrees,
wherein a central UWB control unit (10) of the vehicle (2) is coupled to the first UWB receiver (6) and to the second UWB receiver (6'),
wherein the central UWB control unit (10) is set up to evaluate both a first received signal of an ID transmitter UWB signal (12) received from the first UWB antenna (7) and a second received signal of the ID transmitter UWB signal (12) received from the second UWB antenna (7') as a function of one another for authentication of the communication of the vehicle (2) with the ID transmitter (3),
wherein the UWB control unit (10) is set up to determine a first propagation time value of the first received signal and a second propagation time value of the second received signal, the communication between the ID transmitter (3) and the vehicle (2) being discarded as non-authentic communication, if a transit time difference of the first transit time value and the second transit time value exceeds a maximum transit time by more than a tolerated deviation, the maximum transit time being the time required to cover the distance between the first UWB antenna (7) and the second UWB antenna (7').

2. Communication system (1) according to claim 1, **characterized in that** an overlap space (15) exists in front of a driver's door (8) of the vehicle, within which space a reception sensitivity of the first UWB antenna (7) and a reception sensitivity of the second UWB antenna (7') exceed a minimum value at each location, wherein
- an extension of the overlap space (15),
- the selection, positioning and orientation of the UWB antennas (7, 7', 7'', 7‴), and
- the selection of a UWB communication arrangement of the ID transmitter (3)
are adapted to one another in such a way that UWB communication of the ID transmitter (3) with the vehicle can be carried out for the ID transmitter (3) both via the first UWB antenna (7) and via the second UWB antenna (7'), at least when the ID transmitter is positioned within the overlap space (15) .

3. Communication system (1) according to one of the preceding claims, **characterized in that** the UWB control unit (10) is set up to evaluate a first delay value of the first received signal and a second delay value of the second received signal by means of N-lateration.

4. Communication system (1) according to one of the preceding claims, **characterized in that** the UWB control unit (10) is set up,
- to determine a transit time value for each of the detected received signals and to calculate an average transit time value from the determined transit time values, and/or
- to determine a signal strength value for each of the detected received signals and to calculate an average signal strength value from the determined signal strength values,
whereby a UWB distance value average value is derived from the transit time average value and/or the signal strength average value,
wherein an LF distance value is determined from a signal strength of a detected LF signal of the ID transmitter, wherein the communication between the ID transmitter (3) and the vehicle (2) is discarded as non-authentic communication if the LF distance value and the UWB distance value average value deviate from each other beyond a tolerated maximum deviation.

5. Communication system (1) according to claim 4, **characterized in that** the tolerated maximum deviation is less than 30 percent, preferably less than 10 percent, of the calculated UWB distance mean value.

6. Communication system (1) according to one of the preceding claims, **characterized in that** the UWB control unit (10) is set up to reject the communication between ID transmitter (3) and the vehicle (2) as non-authentic communication if only exactly one of the UWB antennas registers a received signal of the ID transmitter UWB signal.

7. Communication system (1) according to one of the preceding claims, **characterized in that** the first UWB antenna (7) is arranged in a first handle on a driver's door (8) of the vehicle (2) and/or the second UWB antenna (7') is arranged in a second handle on a passenger door (9) of the vehicle (2).

8. Communication system (1) according to one of the preceding claims, **characterized in that** at least three, preferably at least four, spaced-apart UWB antennas (7, 7', 7", 7‴) are arranged on the vehicle (2).

9. Communication system according to claim 8, **characterized in that** four UWB antennas (7, 7', 7'', 7‴) spaced apart from one another are arranged on the vehicle (2), the directions of maximum reception sensitivity being oriented in each case perpendicular to one another and lying parallel to a driving plane of the vehicle.

## Revendications

1. Système de communication (1) d'un véhicule (2) pour la communication du véhicule (2) avec un transmetteur d'identification portable (3), qui est aménagé pour la communication UWB, pour la libération de fonctions du véhicule pour un opérateur (4), qui porte le transmetteur d'identification portable (3) avec lui,
dans lequel le système de communication (1) comprend au moins un premier récepteur UWB (6) avec une première antenne UWB (7) et un deuxième récepteur UWB (6') avec une deuxième antenne UWB (7'),
dans lequel la première antenne UWB (7) et la deuxième antenne UWB (7') sont disposées à une certaine distance l'une de l'autre sur le véhicule (2),
dans lequel la direction d'une sensibilité de réception maximale de la première antenne UWB (7) et la direction d'une sensibilité de réception maximale de la deuxième antenne UWB (7') sont orientées l'une par rapport à l'autre selon un angle qui est d'au moins 30 degrés et/ou la direction d'une sensibilité de réception maximale de la première antenne UWB (7) et la direction d'une sensibilité de réception maximale de la deuxième antenne UWB (7') sont orientées l'une par rapport à l'autre selon un angle qui est au maximum de 120 degrés,
dans lequel une unité de commande UWB centrale (10) du véhicule (2) est couplée au premier récepteur UWB (6) et au deuxième récepteur UWB (6'),
l'unité de commande UWB centrale (10) étant agencée, d'évaluer en fonction l'un de l'autre aussi bien un premier signal de réception reçu par la première antenne UWB (7) d'un signal ID-émetteur UWB (12) qu'un deuxième signal de réception reçu par la deuxième antenne UWB (7') du signal ID-émetteur UWB (12) pour une authentification de la communication du véhicule (2) avec le transmetteur d'identification portable (3),
l'unité de commande UWB centrale (10) est agencée pour déterminer une première valeur de temps de propagation du premier signal de réception et une deuxième valeur de temps de propagation du deuxième signal de réception, la communication entre le transmetteur d'identification portable (3) et le véhicule (2) étant rejetée comme communication non authentique, si une différence de temps de propagation de la première valeur de temps de propagation et de la deuxième valeur de temps de propagation dépasse un temps de propagation maximal de plus d'un écart toléré, le temps de propagation maximal étant la durée nécessaire pour parcourir la distance entre la première antenne UWB (7) et la deuxième antenne UWB (7').

2. Système de communication (1) selon la revendication 1, **caractérisé en ce qu'**il existe un espace de chevauchement (15) devant une porte du conducteur (8) du véhicule, à l'intérieur duquel une sensibilité de réception de la première antenne UWB (7) et une sensibilité de réception de la deuxième antenne UWB (7') dépassent une valeur minimale à chaque endroit, où
- une extension de l'espace de chevauchement (15),
- le choix, le positionnement et l'orientation des antennes UWB (7, 7', 7", 7‴), et
- la sélection d'un dispositif de communication UWB du transmetteur d'identification portable (3)
sont adaptés les uns aux autres de telle sorte que, pour le transmetteur d'identification portable (3), une communication UWB du transmetteur d'identification portable (3) avec le véhicule peut être réalisée aussi bien par la première antenne UWB (7) que par la deuxième antenne UWB (7'), au moins lorsque le transmetteur ID est positionné à l'intérieur de l'espace de chevauchement (15).

3. Système de communication (1) selon l'une quelconque des revendications précédentes, **caractérisé en ce que** l'unité de commande UWB centrale (10) est agencée pour évaluer une première valeur de temps de propagation du premier signal de réception et une deuxième valeur de temps de propagation du deuxième signal de réception au moyen de la latence N.

4. Système de communication (1) selon l'une quelconque des revendications précédentes, **caractérisé en ce que** l'unité de commande UWB centrale (10) est aménagée,
- de déterminer une valeur de temps de propagation pour chacun des signaux de réception détectés et calculer une valeur moyenne de temps de propagation à partir des valeurs de temps de propagation déterminées, et/ou
- de déterminer une valeur d'intensité de signal pour chacun des signaux de réception détectés et de calculer une valeur moyenne d'intensité de signal à partir des valeurs d'intensité de signal déterminées,
une valeur moyenne de valeur de distance UWB étant dérivée de la valeur moyenne de temps de propagation et/ou de la valeur moyenne d'intensité de signal,
dans lequel une valeur de distance LF est déterminée à partir d'une intensité de signal d'un signal LF détecté du capteur ID, dans lequel la communication entre le transmetteur d'identification portable (3) et le véhicule (2) est rejetée en tant que communication non authentique si la valeur de distance LF et la valeur moyenne de valeur de distance UWB s'écartent l'une de l'autre au-delà d'un écart maximal toléré.

5. Système de communication (1) selon la revendication 4, **caractérisé en ce que** l'écart maximal toléré est inférieur à 30 pour cent, de préférence inférieur à 10 pour cent, de la valeur moyenne de valeur de distance UWB calculée.

6. Système de communication (1) selon l'une quelconque des revendications précédentes, **caractérisé en ce que** l'unité de commande UWB centrale (10) est agencée pour rejeter la communication entre le transmetteur d'identification portable (3) et le véhicule (2) en tant que communication non authentique lorsqu'une seule des antennes UWB enregistre un signal de réception du signal ID transmetteur-UWB.

7. Système de communication (1) selon l'une quelconque des revendications précédentes, **caractérisé en ce que** la première antenne UWB (7) est disposée dans une première poignée sur une porte conducteur (8) du véhicule (2) et/ou la deuxième antenne UWB (7') est disposée dans une deuxième poignée sur une porte passager (9) du véhicule (2).

8. Système de communication (1) selon l'une quelconque des revendications précédentes, **caractérisé en ce qu'**au moins trois, de préférence au moins quatre, antennes UWB (7, 7', 7'', 7''') espacées les unes des autres sont disposées sur le véhicule (2).

9. Système de communication selon la revendication 8, **caractérisé en ce que** quatre antennes UWB (7, 7', 7'', 7''') espacées les unes des autres sont disposées sur le véhicule (2), les directions d'une sensibilité de réception maximale étant respectivement orientées perpendiculairement les unes aux autres et étant choisies parallèles à un plan de déplacement du véhicule.
